Europäisches Patentamt

European Patent Office

Office européen des brevets

(19)

(11) **EP 0 538 428 B1**

(12) **EUROPÄISCHE PATENTSCHRIFT**

(45) Veröffentlichungstag und Bekanntmachung des Hinweises auf die Patenterteilung:
**11.09.2002   Patentblatt 2002/37**

(21) Anmeldenummer: **92909188.2**

(22) Anmeldetag: **06.05.1992**

(51) Int Cl.$^7$: **G01N 27/414**, G01N 27/26

(86) Internationale Anmeldenummer:
**PCT/EP92/00990**

(87) Internationale Veröffentlichungsnummer:
**WO 92/021020 (26.11.1992 Gazette 1992/29)**

(54) **VERFAHREN ZUR HERSTELLUNG VON MINIATURISIERTEN CHEMO- UND BIOSENSORELEMENTEN MIT IONENSELEKTIVER MEMBRAN SOWIE VON TRÄGERN FÜR DIESE ELEMENTE**

PROCESS FOR PRODUCING MINIATURISED CHEMO AND BIO-SENSOR ELEMENTS WITH AN ION-SELECTIVE DIAPHRAGM AND BASES FOR THESE ELEMENTS

PROCEDE DE FABRICATION D'ELEMENTS CAPTEURS CHIMIQUES ET BIOLOGIQUES MINIATURISES AVEC UNE MEMBRANE A SELECTIVITE IONIQUE ET DE SUPPORTS POUR CES ELEMENTS

(84) Benannte Vertragsstaaten:
**AT BE CH DE DK ES FR GB GR IT LI LU MC NL SE**

(30) Priorität: **10.05.1991   DE 4115414**

(43) Veröffentlichungstag der Anmeldung:
**28.04.1993   Patentblatt 1993/17**

(73) Patentinhaber: **KNOLL, Meinhard**
**48565 Steinfurt (DE)**

(72) Erfinder: **KNOLL, Meinhard**
**48565 Steinfurt (DE)**

(74) Vertreter: **Hoffmeister, Helmut, Dr. Dipl.-Phys.**
**Patentanwalt,**
**Postbox 38 28**
**48021 Münster (DE)**

(56) Entgegenhaltungen:
**EP-A- 0 299 778          GB-A- 2 236 903**
**US-A- 4 592 824          US-A- 4 874 499**

• **PATENT ABSTRACTS OF JAPAN vol. 6, no. 237 (P-157)(1115) 25. November 1982 & JP,A,57 137 847 ( OLYMPUS KOGAKU KOGYO K.K. ) 25. August 1982**
• **SZE S.M.: 'Physics of Semiconductor Devices', 1981, JOHN WILEY & SONS, SINGAPORE**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung von miniaturisierten Chemo- und Biosensorelementen mit ionenselektiven Membranen, sowie von Trägern für diese Elemente.

Es ist bekannt, Mikrosensoren, die nach dem Prinzip der ionenselektiven Elektroden (ISE) ohne flüssigen Innenelektrolyten arbeiten, in sehr kleinen Ausführungen herzustellen. Hierzu werden beispielsweise Elektroden mit Flüssigmembranen nach dem sogenannten coated-wire-Prinzip eingesetzt (vgl. P. Bergveld, DEVELOPMENT AND APPLICATION OF CHEMICAL SENSORS IN LIQUIDS, Buch: SENSORS AND SENSORY SYSTEMS FOR ADVANCED RO-BOTS, Springer-Verlag Berlin, Heidelberg, 1988, Seite 403). Ein dünner Silberdraht wird mit einer sogenannten ionenselektiven Flüssigmembran umgeben. Von den Dimensionen ist die coated-wire-Elektrode so klein, daß sie auch in Körpergefäße, wie Venen oder Arterien eingeführt werden kann. Analog zu den coated-wire-Elektroden lassen sich coated-film-Elektroden herstellen. Im einfachsten Fall bestehen diese aus einem Kunststoffsubstrat, das eine dünne Silber- bzw. eine mit Silberchlorid überzogene Silberschicht trägt, die mit der ionenselektiven Flüssigmembran bedeckt ist. Coatedfilm-Elektroden dieser Art lassen sich anstelle von Kunststoff- auch auf Siliziumsubstraten herstellen.

Auch ist die Herstellung von ionenselektiven Flüsszgmembranen an sich bekannt. Solche Flüssigmembranen bestehen z.B. aus einer PVC-Matrix, die neben einem Weichmacher auch eine elektroaktive Substanz (Ionophor) enthält, die die Ionenselektivität der Membran bestimmt. Das in einem Lösungsmittel gelöste Membranmaterial kann zum Gießen von Membranen verwendet werden, wobei sich das Lösungsmittel verflüchtigt und eine verfestigte Membran entsteht. Aus der Kundeninformation der Firma FLUKA Feinchemikalien GmbH, Neu-Ulm, mit dem Titel "Selectophore - Ionophores for Ion-Selective Electrodes" sind Beispiele ersichtlich.

Nachteilig ist bei den bekannten Mikrosensoren nach dem coated-wire-Prinzip, daß die Membran sehr schlecht an dem Draht der coated-wire-Elektrode bzw. an der Silberschicht der coated-film-Elektrode haftet. Neben der schlechten Membranhaftung haben diese Elektroden den Nachteil, daß es aufgrund einer Ionophor-Ausblutung zu einer Verarmung des Ionophors in der Membran kommt. Dies hat nicht nur den Verlust der elektrochemischen Eigenschaften, sondern wegen der Abgabe von Stoffen unter Umständen auch eine Einschränkung der Biokompatibilität beim Einsatz im medizinischen Bereich zur Folge.

Die beiden oben genannten Probleme treten auch bei der Anwendung ionenselektiver Flüssigmembranen in Gatebereich ionenselektiver Feldeffekttransistoren (ISFET) auf. Für die Lösung des Haftungsproblems wurden in der Literatur Polyimid-Haltenetze sowie anisotrop geätzte Silizium-Deckel mit enger Öffnung angegeben (vergleiche hierzu Kapitel 4 des Buches "Sensors" von W. Göpel, J. Hesse, J. N. Zemel (Ed.), Band 1, VCH Verlagsgesellschaft Weinheim, 1989, Seite 97 bis 99). Das dort besprochene Haltenetz löst die gestellte Aufgabe nur hinsichtlich der Membranhaftung. Die Anwendung eines Siliziumdeckels stellt ein sehr aufwendiges Verfahren dar, das aufgrund der Justierprobleme bei der Deckelmontage auf relativ großflächige Strukturen (0,1 mm-Strukturen) beschränkt bleiben muß.

Aus der GB-A-2 236 903 ist ein Sensor mit einer ionenselektiven Membran bekannt, dessen Basisteil als FET-Sensor aufgebaut ist. Zusätzlich ist allerdings ein Support erforderlich. Der Transistor muß in einer wasserdichten Position eingebaut und genau eingepaßt sein, da er als rückseitiger Deckel fungiert. Die Befüllung mit einer Membranflüssigkeit ist schwierig, da nur von der kleineren Öffnung aus befüllt werden kann.

Bei der Integration von ionenselektiven Sensorelementen auf einem integrierten Schaltkreis ergeben sich zusätzliche Verkapselungsprobleme, da aufgrund der geringen Abmessungen solcher Silizium-Chips die aktive Membranoberfläche in unmittelbarer Nachbarschaft der dünnen Bonddrähte liegt, die den Chip mit den Anschlußkontakten des Sensorgehäuses elektrisch verbinden.

Zur Lösung des letztgenannten Problems wurde in der Literatur ISFET-Strukturen mit Rückseitenkontakten angegeben (vgl. z. B.: D. Ewald, A. van den Berg and A. Grisel: "Technology for Backside Contacted pH-sensitive ISFETs Embedded in a p-Well Structurea, in der Zeitschrift Sensors and Actuators, B1 (1990), p. 335 - 340).

Als Nachteil solcher Lösungen ist die Tatsache anzusehen, daß die Chip-Oberfläche mit den empfindlichen Halbleiterstrukturen der Signalelektronik nur durch eine dünne Passivierungsschicht vom flüssigen Meßmedium getrennt ist. Schon sehr geringe Verunreinigungen der Halbleiterstrukturen machen die Meßelektronik unbrauchbar. Insbesondere das letztgenannte Verkapselungsproblem tritt nicht nur bei ionenselektiven Sensorelementen mit Flüssigmembranen, sondern auch bei solchen mit anderen, z. B. Festkörpermembranen auf, die Teil eines integrierten Schaltkreises sind.

Für eine Verbesserung kommt es also wesentlich darauf an, ein Prinzip anzugeben, das es erlaubt, ionenselektive Sensorelemente auf Silizium-Chips zu realisieren, die mit Flüssigmembranen, aber auch mit anderen Membranen bzw. elektrochemisch oder biochemisch relevanten Sensorelementbeschichtungen arbeiten, die aus flüssiger Phase hergestellt werden und folgende Eigenschaften aufweisen: gute Membranhaftung, minimale Ionophorverarmung in der Flüssigmembran, gute Aufbringungsmöglichkeiten und Mikrostrukturierbarkeit von Membranen auf Siliziumoberflächen ohne zusätzliche Feinbearbeitung von Verschlußteilen, hohe elektrische Stabilität, gute Bedingungen für die Kontaktierung und Verkapselung des Sensor-Chips.

Diese Aufgabe wird gelöst durch Einsatz von Trägern, die nach dem Verfahren des Anspruches 1 hergestellt sind.

In diesen Trägern läßt sich eine ionenselektive Membran in einem vertikalen Containment herstellen, das eine Öffnung zur Chip-Rückseite besitzt und das durch folgende Eigenschaften gekennzeichnet ist: gute Befüllbarkeit, mikromechanische Verankerung sowie gute laterale Mikrostrukturen der Membran aufgrund der speziellen Containmentgeometrie, niedriger Quotient aus aktiver Membranoberfläche und Membranvolumen zur Erzielung eines Depot-Effektes, d. h. zur Minimierung der Ionophorverarmung in der Membran, aktive Membranoberfläche auf der Rückseite des Silizium-Chips zur Gewährleistung optimaler Kontaktierungs- und Verkapselungsbedingungen.

Das Containment selbst kann im Siliziumsubstrat mit Hilfe bekannter Verfahren der Mikromechanik, z. B. durch anisotropes Ätzen hergestellt werden.

Unter anisotropem Ätzen wird ein Verfahren verstanden, bei dem mit Hilfe bekannter Lithographie- und Maskentechniken Vertiefungen oder Löcher z. B. in einen (100)-orientierten Silizium-Einkristall-Wafer geätzt werden. Wegen der vierzähligen Symmetrie und den jeweils um 54,75° geneigten (111)-Flächen ergeben sich pyramidenförmige Vertiefungen bzw. Löcher. Die endgültigen Abmessungen der Ausgangsöffnungen hängen sowohl von der Maskenstruktur, der Wafer-Dicke als auch von einer genauen Kenntnis der Ätzrate in (111)-Richtung ab. Auf diese Weise lassen sich auch auf einem Wafer Anordnungen von unterschiedlichen Vertiefungen herstellen. Es wird verwiesen auf die Schrift von Anton Heuberger, MIKROMECHANIK, Springer-Verlag Berlin, 1989. Die mit Hilfe des anisotropen Ätzens sich ergebende Vertiefung hat eine Pyramidenform und damit eine große Öffnung auf der einen Wafer-Oberfläche und bei Durchätzen bis zur anderen Oberfläche dort eine relativ kleine Öffnung.

Zwischen dem Durchmesser $W_k$ der kleinen Öffnung und dem Durchmesser $W_g$ der großen Öffnung besteht für (100)-orientierte Siliziumsubstrate mit der Dicke t folgender Zusammenhang (vgl. A. Heuberger, a. a. O., Seite 393):

$$W_k = W_g - \sqrt{2} \cdot t.$$

Hier zeigt sich, daß bei typischen Größen (z. B. von 1 μm bis 100 μm) für die kleine Öffnung ein relativ großer Bedarf an Chipfläche mit dem Durchmesser $W_g$ pro Sensorelement besteht. Somit eignen sich (100)-orientierte Siliziumsubstrate nur für die Realisierung einer begrenzten Anzahl von V-förmigen Containments der oben beschriebenen Art.

Containments mit einem geringeren Flächenbedarf lassen sich auf (110)-orientierten Siliziumsubstraten realisieren. Aufgrund der zweizähligen Symmetrie in diesen Substraten sind die Formen der möglichen Containments komplizierter. Hier verlaufen bei einer geeigneten Justierung der Ätzmasken gegenüber der Substratorientierung einige der ätzbegrenzenden (111)-Kristallflächen und damit auch die Ätzgrubenseitenflächen senkrecht, während andere mit einem Winkel von 35° gegenüber der Substratoberfläche geneigt sind (vgl. A. Heuberger, a. a. O., S. 344 bis 348 und 392 bis 397). Da die parallelen senkrechten Ätzgrubenwände mit sehr geringen Abständen $d_p$ (μm-Bereich) hergestellt werden können, ergibt sich nun ein sehr viel geringerer Chip-Flächenverbrauch durch die Containments. Dieser Flächenverbrauch wird durch den genannten geringsten Abstand $d_p$ sowie die Ätzgrubenweite senkrecht dazu, die durch die geneigten Grubenwände gegeben ist, bestimmt.

Es ist auch möglich, zur Erzielung von durchgeätzen kleinen Öffnungen mit sehr geringer Größentoleranz die Si-Wafer vor dem anisotropen Ätzen mit einer sogenannten Ätzstop-Schicht auf der zweiten Wafer-Oberfläche zu versehen und bis zu dieser Fläche zunächst zu ätzen und anschließend die Ätzstop-Schicht im Bereich der Öffnungsverengung bis zur anderen Wafer-Oberfläche, z. B. von der Rückseite her, zu öffnen. Dies geschieht auch durch bekannte Verfahren, beispielsweise durch einen weiteren selektiven Lithographie- und Ätzmaskenprozeß sowie einen weiteren Ätzvorgang.

Weiterhin ist möglich, mit bekannten Verfahren der thermischen Oxidation, der CVD-, Sputter- oder Sol-Gel-Technik die mit Vertiefungen versehenen Wafer auf der ersten oder zweiten Oberfläche wenigstens im Bereich der Öffnungen der Vertiefung sowie die Innenflächen der Vertiefung mit einer durchgehenden, nichtleitenden $SiO_2$- Schicht zu versehen. Da es aufgrund der hohen Dichte von Hydroxylgruppen an $SiO_2$-Oberflachen zu einer Abstoßung von Flüssigmembranen (z.B. PVC-Membranen) kommt, ist es zur Gewährleistung einer guten Membranhaftung vorteilhaft, diese $SiO_2$-Grenzflächen zu silanisieren. Dieser Silanisierungsprozeß ist im Bereich der Flüssigmembrantechnologie für miniaturisierte Glaselektroden gut eingeführt (vgl. hierzu: Daniel Ammann, "Ion-Selective Microelectrodes", Springer-Verlag, Berlin, 1986). An die Stelle der genannten $SiO_2$-Schichten Können auch andere Materialien (z. B. $Si_3N_4$, $Al_2O_3$-, $Ta_2O_5$-Schichten, sowie Al-, B-, Na-Al- und andere Silikate, Sol-Gel-Schichten aber auch andere geeignete Materialien) treten. Ebenso ist es möglich, die $SiO_2$-Schichten durch eine der genannten Schichten zu ergänzen, so daß eine Schichtenfolge entsteht, z.B. $SiO_2$ und $Si_2N_4$.

Containments der oben beschriebenen Art haben den besonderen Vorteil, daß aufgrund ihrer speziellen Geometrie die Membranen in ihnen mikromechanisch verankert sind und das Ausbluten mobiler Membrankomponenten (z. B. Ionophor, Weichmacher) aufgrund der im Verhältnis zum Membranvolumen sehr geringen aktiven Membranoberfläche minimal ist.

Der besondere Vorteil des Verfahrens ist, daß auf in der Bearbeitung von Mikrochips bekannte und ausgereifte Techniken zurückgegriffen werden kann, um die beschriebenen Containments herzustellen.

Der Kontakt zwischen Membran und den Verstärker- und Impedanzwandlerelementen der Signalelektronik kann auf dem Silizium-Chip nach drei unterschiedlichen Prinzipien erfolgen:

- modifiziertes coated-film-Prinzip

- modifiziertes Halbzellen-Prinzip

- modifiziertes ISFET-Prinzip.

Beim modifizierten coated-film-Prinzip steht die Membran mit einer Silber- bzw. einer mit Silberchlorid überzogenen Silberschicht, die Teile der Containment-Innenwandung bedeckt, in direktem Kontakt.

Beim modifizierten Halbzellen-Prinzip befindet sich eine Festelektrolytschicht z. B. als zweite Schicht in dem V-förmigen Containment über der ionenselektiven Membran. Diese Festelektrolytschicht hat direkten Kontakt mit einer Silber- bzw. einer mit Silberchlorid überzogenen Silberschicht, die Teile der Containment-Innenwandung bedeckt.

Die oben genannte Silberschicht kann auch durch andere geeignete elektrisch leitende Schichten ersetzt werden.

Die Erfindung bezieht sich auch auf ein Verfahren zur Herstellung eines vertikalen ISFET (VISFET). Dabei wird das Prinzip des ionenselektiven Feldeffekttransistors (ISFET), der auf der Basis eines planaren MOS-Feldeffekttransistors entwickelt wurde (vgl. P. Bergveld, a. a. O., S. 407).Dabei werden folgende Verfahrensschritte angewandt:

- Versehen der Vorderseite eines Siliziumsubstrates mit vertikal übereinander angeordneten n- und p-leitenden Schichten für Source, Drain sowie Gätebereich, -

- Ätzen eines Containments in einem dünnen Siliziumsubstrat, bei dem das Containment von einer Öffnung gebildet wird, die sich von einer ersten Oberfläche zu einer gegenüberliegenden parallelen zweiten Oberfläche - sich verjüngend - erstreckt, so daß deren Oberflächen verbunden sind, und daß diese Folgen von Schichten an der Containment-Innenwandung ansteht;

- Versehen der Containment-Innenwandung mit einer dielektrischen Schicht;

- Befüllen des Containments mit einer Membran-Lösung über die große Öffnung, welche Membranlösung nach der Verdampfung des Lösungsmittels eine verfestigte, ionenselektive, mit der dielektrischen Schicht in Kontakt stehende Membran (7) bildet.

Auf diese Weise entsteht ein vertikaler ionenselektiver Feldeffekttransistor (VISFET), der alle Vorteile des speziell geformten Membrancontainments nutzt.

Analog zu anderen bekannten V-MOS-Feldeffekttransistor- Varianten, bei denen z. B. andere Dotierungsverhältnisse (n-und p- Dotierung vertauscht) oder andere Anordnungen der epitaktischen Schicht bzw. andere Grubengeometrien /z. B. U-Strukturen) auftreten, können entsprechende vertikale ISFET-Strukturen (VISFET) aufgebaut werden.

Die Erfindung bezieht sich ausdrücklich auch auf einen vertikalen ISFET (VISFET), der ein vertikales Containment mit einer ionenselektiven Membran besitzt, die ihre aktive Membranoberflache an der Chip-Rückseite hat.

Das Einbringen der Polymermembran, der Flüssigmembran bzw. anderer elektrochemisch relevanter Beschichtungsmaterialien (z. B. Hydrogel), die aus flüssiger Phase hergestellt werden, kann mit Hilfe einer automatischen Mikrodosiereinrichtung erfolgen. Hierbei wird die Membranflüssigkeit in die große Öffnung des Containments eingefüllt. Nach Einhaltung einer materialspezifischen Lagerzeit verflüchtigt sich das Lösungsmittel und es bildet sich in dem Containment die verfestigte ionenselektive Flüssigmembran aus. Bei Verwendung eines zusätzlichen Festelektrolyts kann dieser über der Membran als weitere Schicht in gleicher Weise aus flüssiger Phase aufgebracht werden.

Bei Verwendung sehr kleiner Containments, wie sie sich insbesondere auf (110)-orientierten Siliziumsubstraten realisieren lassen, oder bei Chips mit sehr kleinen Flächen kann es sehr vorteilhaft sein, die Membranflüssigkeit auf indirektem Wege in das Containment einzubringen. Hierbei wird auf dem Wafer eine zusätzliche Vertiefung (Einfüllkammer) mit einem kapilaren Verbindungskanal zum Containment z. B. nach den oben beschriebenen Verfahren der Mikromechanik (z. B. durch anisotropes Ätzen) erzeugt. Die Einfüllöffnung kann so weit von dem Sensorelement entfernt liegen, daß sie bei der Vereinzelung der Chips durch Zerteilung des Wafers abgetrennt werden kann. Somit lassen sich äußerst kleine Sensor-Chips herstellen, auf denen kein zusätzlicher Flächenbedarf für Einfüllöffnungen besteht. Ebenso ist es möglich, mit Hilfe einer Einfüllkammer und mehreren davon abzweigenden kapillaren Verbindungskanälen, mehrere Containments bzw. alle Containments von Chips eines Wafers mit Membranflüssigkeit zu füllen. Zur Gewährleistung eines guten Fließverhaltens der Membranflüssigkeit kann dieser Einfüllprozeß unter Lösungsmittelatmosphäre erfolgen.

Mit dem oben beschriebenen Einfüllverfahren ist ein "fullwafer-Prozeß" für die Realisierung von Flüssigmembranen bzw. anderen Schichten, die aus flüssiger Phase hergestellt werden können, angegeben.

Die ionenselektiven Membranen, die sich in den Containments ausbilden, können zusätzlich mit einer Schutzschicht (z. B. Silicon- oder Epoxydschichten) versehen werden. Dies kann für jedes Containment einzeln aber auch für den gesamten Chip bzw. für den Wafer insgesamt geschehen.

Ionenselektive Sensorelemente der oben beschriebenen Art lassen sich auch als Biosensorelemente ausgestalten. Hierfür wird z. B. in der Membran ein Enzym immobilisiert. Ebenso kann diese Membran Antikörper, Mikroorganismen oder Organellen tragen. Im einfachsten Fall werden diese Stoffe vor dem Füllen des Containments schon der Membranflüssigkeit zugegeben.

Mit Hilfe solcher Biosensorelemente lassen sich Stoffe wie Glucose, Penicillin, Harnstoff u. a. in Flüssigkeiten bestimmen (vgl. hierzu: Peter Hauptmann, "Sensoren", Carl Hanser Verlag, München, 1991, Seite 124 bis 128).

Die oben beschriebenen Sensorelemente können nach dem Vereinzeln der Chips eines Wafers in Gehäuse eingebaut bzw. mit Kunststoffmaterial ummantelt werden. Hierbei ist es besonders vorteilhaft, daß sich die aktiven Membranoberflächen nicht auf der selben Chip-Seite wie die empfindliche Halbleiterelektronik sowie die feinen Bonddrähtchen befinden.

Ausführungsbeispiele der Erfindung, mit Ausnahme der nicht zur Erfindung gehörenden Ausführungsformen gemäß den Figuren 1 bis 3, sind in der beigefügten Zeichnung dargestellt. Die Figuren der Zeichnung zeigen im einzelnen:

Fig. 1            Ausschnitt aus einem Sensor-Chip mit ionenselektiver Membran in mikrostrukturiertem Containment,

Fig. 2            einen Ausschnitt mit abgedeckter Membran,

Fig. 3            einen Ausschnitt mit einem Containment, das mit Hilfe einer Ätzstoppschicht hergestellt wurde,

Fig. 4            ein ionenselektives Sensorelement nach dem "coa-ted-film-Prinzip",

Fig. 5            einen vertikalen ISFET (VISFET),

Fig. 6            eine weitere VISFET-Variante,

Fig. 7 und Fig. 8     zwei Ausführungsformen von ionenselektiven Sensorelementen nach dem HalbzellenPrinzip,

Fig. 9            einen VISFET mit Innenelektrolyt,

Fig. 10           ein Sensorelement mit Kapillarkanal und Einfüllöffnung,

Fig. 11           eine kapillare Kanalstruktur zur Füllung der Containments mit Membranflüssigkeit,

Fig. 12           einen Sensor-Chip in einem Gehäuse.

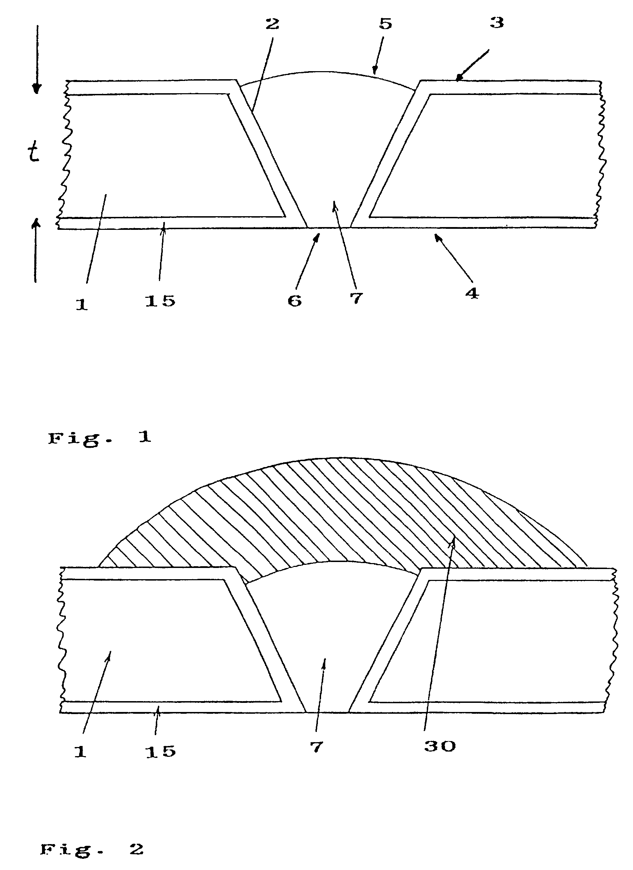

Die Figur 1 zeigt den Ausschnitt eines Schnittes durch ein nicht zur Erfindung gehörendes Sensor-Chip-Element, das in einem Silizium-Wafer-Kristall hergestellt wird. Die Dicke dieses z. B. (100)-orientierten Wafers 1 beträgt t = 0,1 mm - 1 mm, vorzugsweise 100 µm - 500 µm. In einem exakt lokalisierten Bereich, der durch bekannte Masken-Techniken definiert wird, wird in (100)-Richtung des Kristalls eine pyramidenförmige Vertiefung, das Containment 2, eingeätzt, die einen Trichter mit dem Keilwinkel von 54,75° entlang der (111)-Richtung ausbildet. Der Ätzvorgang geht aus von der einen Oberfläche 3 und setzt sich fort bis zur gegenüberliegenden parallelen zweiter Oberfläche 4. Im folgenden sollen zur Vereinfachung die Oberfläche 3 als Vorderseite und die Oberfläche 4 als Rückseite bezeichnet werden.

Wird anstelle des (100)-orientierten ein (110)-orientierter Siliziumkristall verwendet, so läßt sich dieser gegenüber der verwendeten Ätzmaske so justieren, daß wie weiter oben beschrieben, beim Ätzen zwei sich gegenüberliegende senkrechte Wände sowie zwei geneigte Wände des Containments entstehen. Bei einem sehr geringen Abstand (µm -Bereich) zwischen den parallelen senkrechten Wänden lassen sich Containments mit sehr geringem Chip-Flächenverbrauch realisieren. Der in der Figur 1 dargestellte Schnitt durch einen solchen

Silizium-Chip verläuft in diesem Fall parallel zu den senkrechten Wänden des Containments.

Es bilden sich demnach zwei die Vorderseite bzw. Rückseite 3 und 4 durchsetzende Öffnungen 5 und 6 aus, deren Durchmesser sich in der oben angegebenen Weise zueinander verhalten. Die kleine Öffnung hat dabei einen Durchmesser zwischen $10^{-4}$ und $10^{-1}$ mm.

Für das anisotrope Ätzen können KOH oder andere bekannte Medien eingesetzt werden (vgl. A. Heuberger, a. a. O., Seite 125 bis 1609).

Die gesamte bzw. Teile der Siliziumoberfläche können nach dem Ätzen des Containments z. B. mit Hilfe der bekannten Verfahren der thermischen Oxidation, der CVD- oder Spin-On-Glas-Technik mit einer $SiO_2$-Schicht 15 überzogen werden, die aus dem weiter oben angegebenen Grund silanisiert werden kann. Diese Schicht überzieht auch die Innenwandung des Containments. Ebenso ist es möglich, anstelle oder zusätzlich über die $SiO_2$-Schicht andere Schichten (z. B. $Si_3N_4$-Schicht) ebenfalls nach den oben genannten Verfahren aufzubringen.

Der mit einem, üblicherweise vielen Containments 2 versehene Wafer wird anschließend z. B. auf eine ringförmige Unterlage gelegt, so daß die Öffnungen der Containments frei bleiben. Es ist aber auch möglich, den Wafer auf eine ebene polierte Platte zu legen. Mit Hilfe einer automatischen Mikrodosiereinrichtung (nicht dargestellt) wird die Vertiefung 2 mit einer eine ISE-Membran ausbildenden Lösung gefüllt. Wird beim Einfüllen der Membranflüssigkeit die untere Öffnung des Containments offengelassen, so bleibt die Lösung aufgrund ihrer Oberflächenspannung sowie der sehr geringen Weite der Öffnung dennoch im Containment. Wie bekannt, kann es sich bei solchen Lösungen zur Herstellung einer ionenselektiven Membran z. B. um PVC, einen Weichmacher sowie einen Ionophor handeln, die in Tetrahydrofuran als Lösungsmittel gelöst sind. Genaue Rezepturen für die Herstellung der Membrane und derartiger Lösungen sind der eingangs genannten Kundeninformation der Firma FLUKA zu entnehmen. Es können aber auch andere Membranmaterialien, die sich aus flüssiger Phase herstellen lassen, sowie andere Schichten (z. B. Hydrogel) eingefüllt werden.

Die Öffnung 5 bleibt nach dem Einfüllen der Lösung offen. Der mit den Vertiefungen versehene Wafer wird in staubfreier Atmosphäre stehengelassen, bis das Lösungsmittel verdampft ist und sich zurückbleibend eine verfestigte Membran 7 gebildet hat.

Wie aus der Figur 1 ersichtlich ist, ist die aktive Membranoberfläche, die die Öffnung 6 ausfüllt, sehr klein, während das gesamte Membran-Volumen sehr groß ist. Es ergibt sich damit auch eine über die Zeit gesehen geringe Ionophorverarmung in der Membran 7. Darüber hinaus dient die besondere Geometrie des Containments zur mikromechanischen Verankerung der Membran.

Ein anderes, nicht zur Erfindung gehörendes Ausführungsbeispiel ist in der Figur 2 gezeigt. Hier ist das membrangefüllte Containment eines Sensor-Chips nach Figur 1 mit einer Schutzschicht 30 (z. B. Epoxid- oder Silicon-Schicht) überzogen. Es ist auch möglich, anstelle einer solchen kleinflächigen Abdeckung den ganzen Chip bzw. den ganzen Wafer vor dem Vereinzeln der Chips mit einer solchen, die Containments verschliessenden Schicht zu versehen.

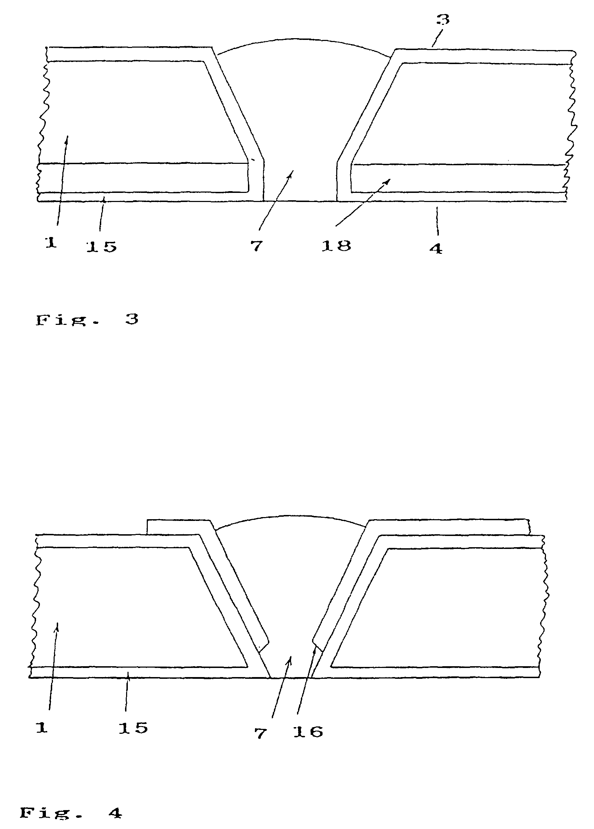

Figur 3 zeigt ein nicht zur Erfindung gehörendes Ausführungbeispiel, aus dem die Möglichkeit hervorgeht, die Containment-Geometrie im Bereich der kleinen Öffnung an der Chip-Rückseite mit Hilfe einer Ätzstop-Schicht 18 exakt einzustellen. Hierbei wird bei der anisotropen Ätzung des Containments der Ätzvorgang automatisch an einer zuvor z. B. stark mit Bor dotierten Ätzstop-Schicht unterbrochen (vgl. hierzu: A. Heuberger, a. a. O., Seite 151 und 141 bis 1459).

In einem weiteren Ätzmasken- sowie Ätzprozeß kann dann die kleine Öffnung des Containments z. B. von der Rückseite her geöffnet werden. Das Einfüllen sowie Abdecken der Membran kann anschließend in gleicher Weise wie in den vorangegangenen Beispielen erfolgen.

Figur 4 zeigt eine Möglichkeit, das oben beschriebene Containment zur Herstellung von Sensorelementen nach dem modifizierten coated-film-Prinzip zu nutzen. Der mit einer isolierenden und ggf. silanisierten $SiO_2$-Schicht oder einer anderen isolierenden Schicht versehene Wafer 1 wird noch mit einem dünnen, im Bereich der Vertiefung trichterförmig oder streifenförmig ausgebildeten Metallfilm 16 versehen, der z. B. unter Anwendung von bekannter Maskentechnik und Aufdampf - oder Sputterverfahren aufgebracht wird. Der Metallfilm, der beispielsweise aus Silber, einer mit Silberchlorid überzogenen Silberschicht oder einer anderen elektrisch leitenden Schicht (z. B. Platin oder Gold) besteht, dient dazu, eine elektrische Verbindung zwischen der später eingebrachten Membran 7 und einer auf dem selben Silizium-Chip integrierten Signalelektronik (nicht dargestellt) herzustellen.

Die Chloridisierung der aufgedampften oder aufgesputterten Silberschicht kann z. B. nach den bekannten Verfahren auf chemischem oder galvanischem Wege erfolgen.

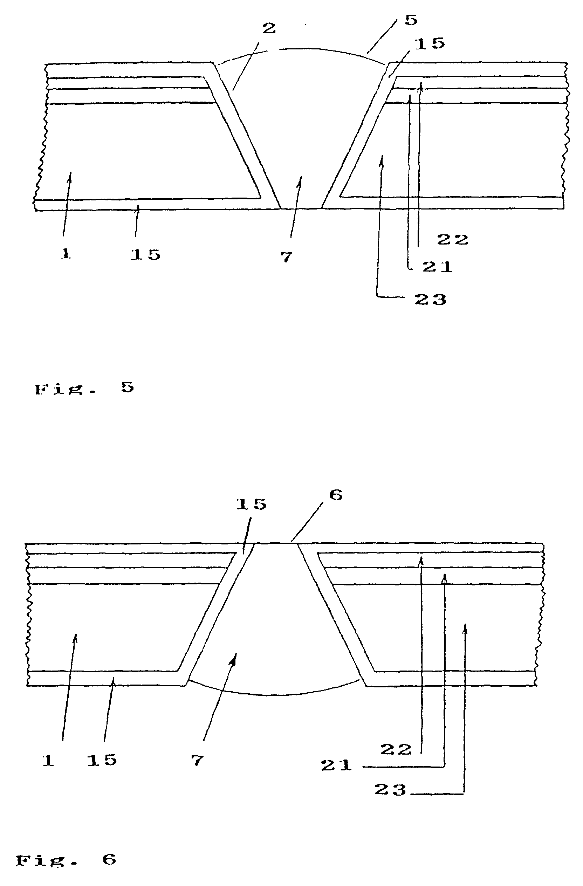

Eine weitere Anwendung des Verfahrens stellt die Verwendung des oben beschriebenen Containments als Basiskonstruktion von Sensorelementen nach dem ISFET-Prinzip dar. Hierbei handelt es sich um das Prinzip eines vertikalen ionenselektiven Feldeffekttransistors (VISFET). Es sind verschiedene Möglichkeiten des Aufbaus möglich. Die Figuren 5 und 6 zeigen zwei verschiedene Möglichkeiten.

Ein Siliziumeinkristall-Wafer wird in der bereits beschriebenen Weise anisotrop geätzt (vgl. Fig. 5), wobei sich eine Vertiefung 2 ergibt, die bei Verwendung von (100)-orientiertem Silizium die Form eines inversen Pyramidenstumpfes hat. Wird (110)-orientiertes Silizium verwendet, so ergeben sich bei geeigneter Justierung der Ätzmasken Formen der Vertiefung 2, die sich durch zwei parallele senkrechte sowie zwei geneigte Wände auszeichnen. Aufgrund des möglichen geringen Abstandes der parallelen senkrechten Containmentwände können auf diese Weise Sensorelemente mit sehr geringem Chip-Flächenverbrauch realisiert werden. In diesem Fall stellt die Figur 5 einen Schnitt durch das Sensorelement dar, der parallel zu den senkrechten Containmentwänden verläuft.

Das Containment wird in einem Substrat 1 hergestellt, das zuvor analog zu VMOS-FET (vgl. R. Paul, a. a. O., Seite 336) mit einer stark N-dotierten Source-Schicht 22, einer P-dotierten Schicht 21 für den Kanalbereich sowie einer n-dotierten Drain-Schicht 23 versehen ist. Der Drain-Bereich kann wie in Figur 5 dargestellt, durch das Siliziumsubstrat 1 selbst gegeben sein. Es ist aber auch möglich, analog zum VMOS-FET eine zusätzliche Schicht zu verwenden, die epitaktisch auf dem Substrat erzeugt werden kann. Anschließend wird eine die ISE-Membran ausbildende Lösung in die Vertiefung 2 eingefüllt und bis zur Verdampfung des Lösungsmittels und Ausbildung der Membran 7 stehengelassen.

Im vorliegenden Fall befindet sich der Kanal-Bereich im Bereich der größeren Öffnung 5. In ähnlicher Weise ist es auch möglich (vgl. Figur 6), einen Schichtaufbau so anzuordnen, daß der Kanal-Bereich 21 sich im Bereich der kleineren Öffnung 6 befindet. Das Gatedielektrikum besteht wie bei den bekannten ISFET z. B. aus $SiO_2$ bzw. einer $SiO_2/Si_3N_4$ Schichtenfolge.

Die große Öffnung des Containments kann, nachdem die ionenselektive Membran ausgebildet ist, wie in Fig. 2 dargestellt, mit einer Schutzschicht abgedeckt werden.

Die Membran 7 bildet jeweils das sogenannte "Gate" des VIS-FETs. Es sei ausdrücklich angemerkt, daß neben dem hier vorliegenden "Verarmungstyp" auch der sogenannte "Anreicherungstyp" sowie ISFET mit umgekehrten Leitungstypen (n und p vertauscht) vorgesehen werden kann.

Zur Ergänzung, jedoch ohne Beanspruchung im Rahmen der Patentansprüche, sei darauf verweisen, daß die in den Figuren 5 und 6 dargestellten Strukturen sich auch für die Herstellung von VISFET mit Festkörpermembran und einer zusätzlichen elektrochemisch relevanten Schicht 7 eignen, die die Flüssigmembran ersetzt. So kann die dielektrische Schicht 15 als Folge einer $SiO_2$- sowie einer zusätzlichen Festkörperschicht (z. B. $Si_3N_4$, $Ta_2O_5$ o. a.) auf dem Silizium ausgebildet sein. Diese zusätzliche Schicht läßt sich z. B. auf dem $SiO_2$ mit Hilfe der bekannten CVD-, der Sputter oder der Sol-Gel-Technik herstellen und dient als ionenselektive Festkörpermembran.

Werden zwei gleiche VISFET-Strukturen dieser Art auf einem Silizium-Chip realisiert, ergibt sich die Möglichkeit, nur eine dieser VISFET-Strukturen mit einer zusätzlichen Schicht 7 zu versehen. Diese Schicht kann zum Beispiel aus Hydrogel bestehen, das das elektrochemische Ansprechen der darunterliegenden Festköpermembran extrem verzögert, so daß sich durch die Kombination der VISFET-Strukturen mit und ohne Hydrogelschicht 7 die bekannte Möglichkeit für die Differenzmessung ergibt.

Die oben dargestellten ionenselektiven Sensorelemente mit mikromechanisch strukturiertem Containment können auch so modifiziert werden, daß sie mit einer verfestigten Innenelektrolytschicht nach dem Halbzellenprinzip arbeiten.

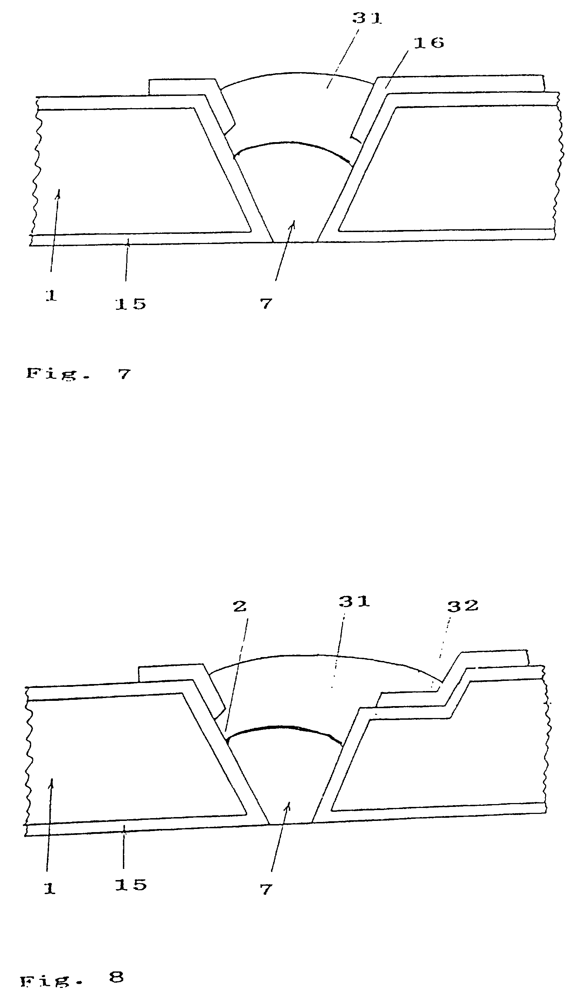

Die Figuren 7 und 8 zeigen zwei Ausführungsformen. Das Beispiel nach Figur 7 unterscheidet sich von Figur 4 allein dadurch, daß die Ableitelektrode 16 nicht so tief in das Containment hineinreicht und über der ionenselektiven Flüssigmembran 7 eine verfestigte Innenelektrolytschicht 31 angeordnet ist. Die Ableitelektrode kann z. B. aus einem mit Silberchlorid überzogenen Silberfilm bestehen.

Nachdem die ionenselektive Flüssigmembran (z. B. PVC-Membran) in der oben beschriebenen Weise in das Containment eingefüllt ist und sich verfestigt hat, kann darüber in einem weiteren Gießvorgang das Innenelektrolyt eingefüllt werden. Das Innenelektrolyt kann in bekannter Weise aus einer Salzlösung (z. B. KCl) bestehen, die z. B. mit Gelatine, Agar-Agar oder Polyvinylalkohol versetzt ist, so daß sich einige Zeit nach dem Einfüllen des zunächst flüssigen Innenelektrolyts eine verfestigte Innenelektrolytschicht im Containment über der ionenselektiven Flüssigmembran ausbildet.

In Figur 8 ist eine weitere Variante dargestellt, die sich von der vorhergehenden dadurch unterscheidet, daß sich neben dem großen Containment 2 ein kleines Containment 32 befindet, das mit dem großen direkt verbunden ist und sich ebenfalls durch die oben beschriebenen anisotropen Ätzverfahren erzeugen läßt. Diese Struktur erleichtert die Trennung von Flüssigmembran und Innenelektrolytschicht.

Es lassen sich darüber hinaus auch VISFET-Strukturen mit Innenelektrolyt herstellen (Figur 9). Diese Ausführungsform unterscheidet sich von dem Beispiel nach Figur 5 dadurch, daß über der dielektrischen Schicht 15 z. B. eine Silberschicht 33 aufgedampft oder aufgesputtert und lithographisch strukturiert ist, die anschließend mit einer Silberchloridschicht überzogen wird. Das Containment wird analog zum Beispiel aus Figur 8 mit Flüssigmembran 7 und Innenelektrolyt 31 versehen.

Zur Vereinfachung der Einfüllung von Membranlösungen oder anderen Flüssigkeiten zur Herstellung elektrochemisch relevanter Schichten können kapillare Kanäle verwendet werden. Diese Kanäle werden ebenso wie die Containments mit Hilfe des anisotropen Ätzens hergestellt und können V-förmige oder U-förmige Querschnitte haben.

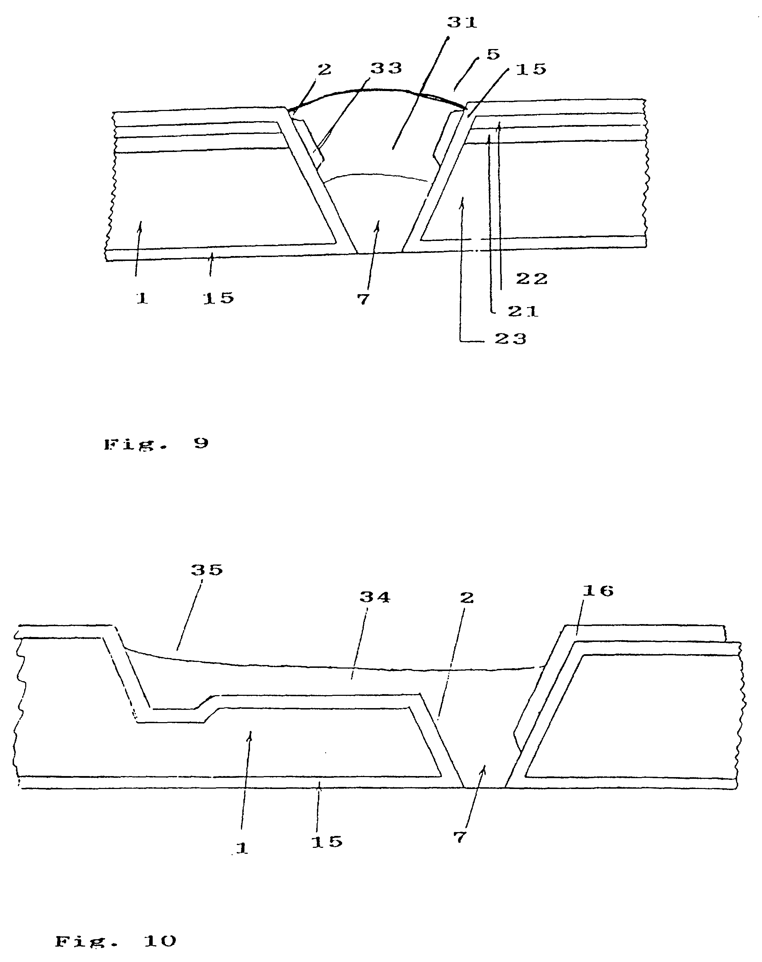

Die Figur 10 zeigt als Beispiel eine Struktur nach Figur 4 im Schnitt, die mit einem kapillaren Kanal 34 sowie einer Einfüllöffnung 35 versehen ist. Die Membranflüssigkeit wird in die große Einfüllöffnung gefüllt. Sie wird aufgrund der Kapillarkräfte im Kanal gefördert und füllt anschließend das Containment aus. Es ist auch möglich, von einer Einfüllöffnung aus mehrere Containments auf umliegenden Chips bzw. auf allen Chips eines Wafers mit Membranflüssigkeit zu füllen. Die Einfüllöffnung kann anschließend beim Vereinzeln der Chips eines Wafers abgetrennt werden. Zur Verbesserung des Fließverhaltens der Membranlösung kann das Einfüllen unter Lösungsmittelatmosphäre erfolgen.

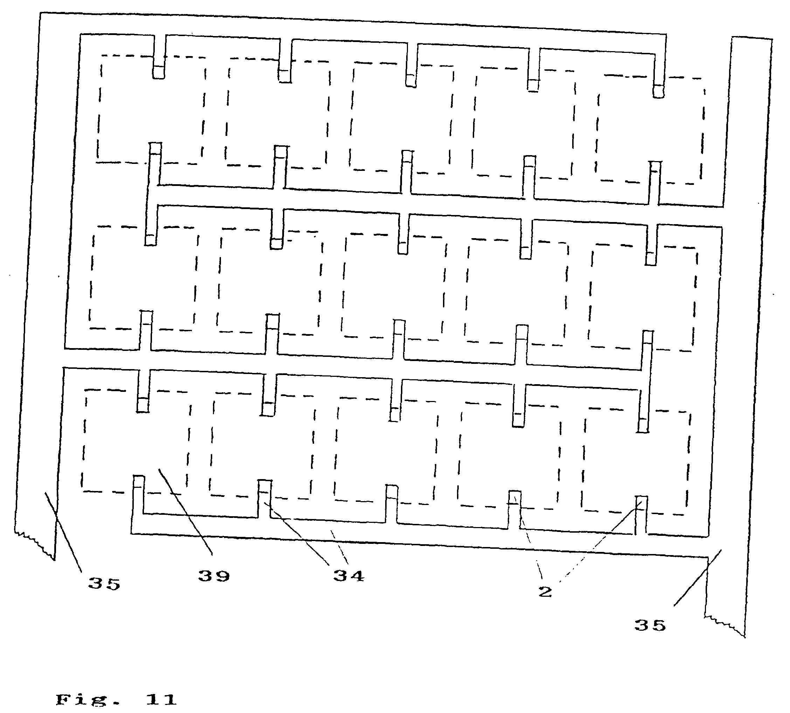

In der Figur 11 ist ein System von Kapillarkanälen 34 sowie großen Einfüllöffnungen 35 dargestellt. Jeweils am Ende eines Kapillarkanals befindet sich ein Chip 39 sowie das Containment 2 eines Sensorelementes.

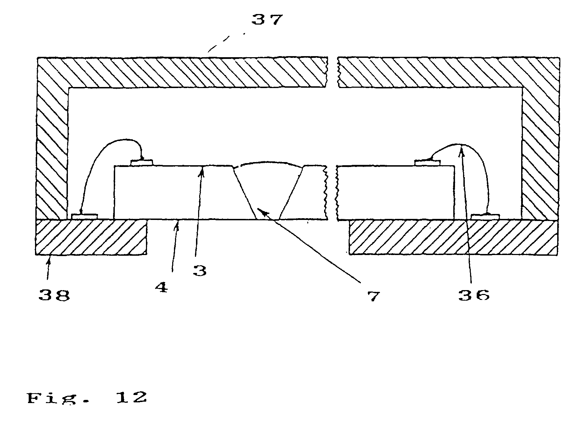

Die Figur 12 zeigt einen Silizium-Chip mit ionenselektiver Membran 7 in einem Containment, die ihre aktive Membranoberfläche auf der der Chip-Rückseite 4 hat. Auf der Chip-Vorderseite 3 befinden sich die Kontaktflächen des Chips, die mit Hilfe feiner Bonddrähtchen 36 mit den Gehäusekontakten verbunden werden. Anstelle des dargestellten Gehäuseoberteils 37 kann auch ein Träger 38 verwendet und der gesamte Sensor-Chip auf der Vorderseite mit Kunststoff versiegelt werden.

## Patentansprüche

1. Verfahren zur Herstellung von Trägern mit miniaturisierten Chemo- und Biosensorelementen, mit folgenden Verfahrensschritten:

   - Ätzen eines Containments (2) in einem dünnen Siliziumsubstrat (1), bei dem das Containment (2) von einer (Öffnung (5,6) gebildet ist, die sich von einer ersten Oberfläche (3) zu einer gegenüberliegenden parallelen zweiten Oberfläche (4) - sich verjüngend - erstreckt, so daß deren Oberflächen (Vorderseite 3, Rückseite 4) verbunden sind,
   - Einbringen wenigstens einer Elektrode (16) in das Containment (2), die an seiner Innenwandung anliegt,
   - Befüllen des Containments (2) mit einer Membranlösung über die große Öffnung, welche Membranlösung nach Verdampfung des Lösungsmittels eine verfestigte ionenselektive, mit der Elektrode (16) im Kontakt stehende Membran (7) bildet.

2. Verfahren nach Anspruch 1, **dadurch gekennzeichnet, daß** ein anisotropes Ätzen des Containments (2) in einem (100)- oder (110)-orientierten Siliziumsubstrat (1) erfolgt, so daß eine Öffnung (5,6) gebildet wird, die sich von einer ersten Oberfläche (Vorderseite 3) zu einer gegenüberliegenden parallelen zweiten Oberfläche (Rückseite 4) verjüngt, wobei das im (100)-orientierten Siliziumsubstrat (1) erzeugte Containment (2) pyramidenstumpfförmig ist und entsprechend das im (110)-orientierten Siliziumsubstrat erzeugte Containment zwei parallele senkrechte und zwei geneigte Wände aufweist.

3. Verfahren nach Anspruch 1 oder 2, **dadurch gekennzeichnet, daß** das Siliziumsubstrat (1) vor dem Ätzen mit seiner Ätzstop-Schicht (18) auf der Rückseite (4) versehen wird, daß anschließend das Substrat (1) von der Vorderseite (3) bis zur Ätzstop-Schicht (18) geätzt wird, und daß anschließend die Ätzstop-Schicht (18) im Bereich der Öffnungsverengung bis zur Rückseite (4) durchgeätzt wird.

4. Verfahren nach Anspruch 1 bis 3, **dadurch gekennzeichnet, daß** die Vorder- (3) und Rückseite (4) mit Hilfe einer thermischen Oxidation oder mit CVD- oder mit Sol-Gel-Technik wenigstens im Bereich der Öffnungen (5, 6) des Containments (2) sowie die Innenflächen des Containments mit einer durchgehend $SiO_2$-Schicht versehen werden.

5. Verfahren nach wenigstens einem der vorhergehenden Ansprüche, **dadurch gekennzeichnet, daß** die $SiO_2$-Schicht, die die Phasengrenze zur ionenselektiven Membran bildet, an der Oberfläche silanisiert wird.

6. Verfahren nach wenigstens einem der vorhergehenden Ansprüche, **dadurch gekennzeichnet, daß** anstelle oder zusätzlich zur $SiO_2$-Schicht eine weitere Schicht (z. B. $Si_3N_4$) auf die Innenwandung des Containments (2) aufgebracht wird.

7. Verfahren nach wenigstens einem der vorhergehenden Ansprüche, **dadurch gekennzeichnet, daß** die Elektrode (16) aus einem aufgedampften oder aufgesputterten und lithographisch strukturiertem Silberfilm, einem mit Silberchlorid überzogenen Silberfilm oder einem anderen leitenden Film besteht.

8. Verfahren nach wenigstens einem der Ansprüche 1 bis 7, **dadurch gekennzeichnet, daß** in das Containment (2) eine Lösung eingefüllt wird, die nach Verfestigung eine Elektrolytschicht, beispielsweise eine Hydrogelschicht, ausbildet, wobei die Elektrode (16) über diese Elektrolytschicht mit der Membran in Kontakt steht.

9. Verfahren nach wenigstens einem der vorhergehenden Ansprüche, **dadurch gekennzeichnet, daß** anstelle der ionenselektiven Membran in das Containment (2) eine Membranlösung eingefüllt wird, die nach Verfestigung eine Membran (7) ausbildet, in der ein biochemisch aktives Material eingelagert ist.

10. Verfahren zur Herstellung eines vertikalen ISFET (VIS-FET) mit folgenden Verfahrensschritten:

- Versehen der Vorderseite eines Siliziumsubstrates (1) mit vertikal übereinander angeordneten n- und p-leitenden Schichten für Source, Drain sowie Gatebereich,

- Ätzen eines Containments (2) in einem dünnen Siliziumsubstrat, bei dem das Containment (2) von einer Öffnung (5,6) gebildet wird, die sich von einer ersten Oberfläche (3) zu einer gegenüberliegenden parallelen zweiten Oberfläche (4) - sich verjüngend - erstreckt, so daß deren Oberflächen (3,4) verbunden sind, und daß diese Folgen von Schichten an der Containment-Innenwandung ansteht;

- Versehen der Containment-Innenwandung mit einer dielektrischen Schicht;

- Befüllen des Containments mit einer Membran-Lösung über die große Öffnung, welche Membranlösung nach der Verdampfung des Lösungsmittels eine verfestigte, ionenselektive, mit der dielektrischen Schicht in Kontakt stehende Membran (7) bildet.

11. Verfahren nach Anspruch 10, **dadurch gekennzeichnet, daß** über der ionenselektiven Membran (7) eine verfestigte Innenelektrolytschicht (31) im Containment (2) aufgebracht wird, die mit einem Gatekontakt (33) des vertikalen ISFET, z. B. aus einer mit Silberchlorid überzogenen Silberschicht, in Kontakt gebracht wird.

12. Verfahren nach Anspruch 11, **dadurch gekennzeichnet, daß** das Containment von der Substratrückseite (4) aus geätzt wird und die kleine Containmentöffnung mit der aktiven Membranoberfläche an der Substratvorderseite angeordnet wird.

13. Verfahren nach wenigstens einem der vorhergehenden Ansprüche, **dadurch gekennzeichnet, daß** das Containment (2) an einen kapillaren Kanal (34) mit einer Einfüllöffnung (35) verbunden wird, in die die Membranlösung unter Lösungsmittel-Atmosphäre eingefüllt wird.

14. Verfahren nach Anspruch 13, **dadurch gekennzeichnet, daß** von einer Einfüllöffnung aus mehrere Containments auf weiteren, umliegenden Chips (39), bzw. auf allen Chips eines Siliziumsubstrats mit Membranflüssigkeit gefüllt und die Chips anschließend vereinzelt werden.

15. Verfahren nach wenigstens einem der vorhergehenden Ansprüche, **dadurch gekennzeichnet, daß** die große Öffnung (5) des Containments und/oder die Einfüllöffnung sowie der kapillare Kanal (34) mit einer Schutzschicht (30) abgedeckt werden.

16. Verfahren nach wenigstens einem der vorhergehenden Ansprüche, **dadurch gekennzeichnet, daß** das Sensorelement in ein Gehäuse eingebaut oder mit einer Schutzschicht versiegelt wird und daß seine aktiven Membranoberflächen an der Rückseite (4) mit einer Meßflüssigkeit in Kontakt stehen.

**Claims**

1. A method of producing supports for miniaturised chemical and biological sensor elements in the following steps:

- etching a containment (2) in a thin silicon substrate (1), wherein the containment (2) is formed by an opening (5, 6) which extends from a first surface (3) and tapers towards an opposite parallel second surface (4) so that the surfaces (front 3 and back 4) are connected,

- inserting at least one electrode (16) into the containment (2) to abut the inner wall thereof, and

- filling the containment (2) with a membrane solution through the large opening, wherein after evaporation of the solvent the membrane solution forms a solid ion-selective membrane (7) in contact with the electrode (16).

2. A method according to claim 1 **characterised by** anisotropic etching of the containment (2) in a (100) or (110)-oriented silicon substrate (1) so as to form an opening (5, 6) which extends from a first surface (front 3) and tapers towards an opposite parallel second surface (back 4) wherein the containment (2) generated in the (100)-oriented silicon substrate (1) is in the form of a truncated pyramid and correspondingly the containment generated in the (110)-oriented silicon substrate has two parallel perpendicular and two sloping walls.

3. A method according to claim 1 or 2, **characterised in that** before etching, the silicon substrate (1) is covered with a resist layer (18) on the back (4), after which the substrate (1) is etched from the front (3) as far as the resist layer (18) and the resist layer (18) is then etched through to the back (4) at the place where the opening narrows.

4. A method according to claims 1 to 3, **characterised in that** the front (3) and the back (4) and the inner surfaces of the containment are covered with a continuous $SiO_2$ layer by thermal oxidation or by CVD or sol-gel technology at least in the region of the openings (5, 6) in the containment (2).

5. A method according to at least one of the preceding claims, **characterised in that** the $SiO_2$ layer, which constitutes the phase interface with the ion-selective membrane, is silanised at the surface.

6. A method according to any of the preceding claims, **characterised in that** instead of or in addition to the $SiO_2$ layer, a further layer (e.g. $Si_3N_4$) is applied to the inner wall of the containment (2).

7. A method according to at least one of the preceding claims, **characterised in that** the electrode (16) comprises a vapour-deposited or sputtered, lithographically structured silver film, or a silver film coated with silver chloride, or another conductive film.

8. A method according to at least one of claims 1 to 7, **characterised in that** a solution is poured into the containment (2) and after solidifying forms an electrolyte layer, e.g. a hydrogel layer, wherein the electrode (16) is in contact with the membrane via the electrolyte layer.

9. A method according to at least one of the preceding claims, **characterised in that** instead of the ion-selective membrane, a membrane solution is poured into the containment (2) and solidifies to form a membrane (7) in which a biochemically active material is embedded.

10. A method of producing a vertical ISFET (VISFET) in the following steps:

   - covering the front of a silicon substrate (1) with vertically superposed n- and p-conducting layers for the source, drain and gate region,

   - etching a containment (2) in a thin silicon substrate, wherein the containment (2) is formed by an opening (5, 6) which extends from a first surface (3) and tapers towards an opposite parallel second surface (4) so that the surfaces (3, 4) are connected, and this sequence of layers appears on the inner wall of the containment;

   - covering the containment inner wall with a dielectric layer, and

   - filling the containment with a membrane solution through the large opening, wherein after the solvent has evaporated, the membrane solution forms a solid ion-selective membrane (7) in contact with the dielectric layer.

11. A method according to claim 10, **characterised in that** via the ion-selected membrane (7) a solid internal electrolyte layer (31) is disposed in the containment (2) and is brought into contact with a gate contact (33) of the vertical ISFET, e.g. made from a layer of silver coated with silver chloride.

12. A method according to claim 11, **characterised in that** the containment is etched from the back (4) of the substrate, and the small opening in the containment and the active membrane surface are disposed on the front of the substrate.

13. A method according to at least one of the preceding claims, **characterised in that** the containment (2) is connected by a capillary channel (34) to a filling opening (35) into which the membrane solution is poured in a solvent atmosphere.

**14.** A method according to claim 13, **characterised in that** a number of containments on additional surrounding chips (39) or on all chips of a silicon substrate are filled to a single opening with membrane liquid and the chips are then separated.

**15.** A method according to at least one of the preceding claims, **characterised in that** the large opening (5) of the containment and/or the filling opening and the capillary channel (34) are covered with a protective layer (30).

**16.** A method according to at least one of the preceding claims, **characterised in that** the sensor element is installed in a casing or sealed with a protective layer and its active membrane surfaces are in contact with a measuring liquid at the back (4).

## Revendications

**1.** Procédé de fabrication de supports d'éléments capteurs chimiques et biologiques miniaturisés, qui comprend les étapes consistant à :

- graver une enceinte de confinement (2) dans un substrat mince (1) en silicium, l'enceinte de confinement (2) consistant en une ouverture (5, 6) qui s'étend - en se rétrécissant - d'une première surface (3) vers une deuxième surface parallèle et opposée (4) d'une manière telle que ses surfaces (face avant 3, face arrière 4) sont connectées,

- introduire dans l'enceinte de confinement (2) au moins une électrode (16) qui est adjacente à sa paroi interne,

- remplir d'une solution de membrane l'enceinte de confinement (2) à travers la grande ouverture, la solution de membrane formant après évaporation du solvant une membrane (7) solidifiée à sélectivité ionique qui est au contact de l'électrode (16).

**2.** Procédé selon la revendication 1, **caractérisé en ce qu'**une gravure anisotrope de l'enceinte de confinement (2) est effectuée dans un substrat de silicium (1) orienté (100) - ou (110) - afin de former une ouverture (5, 6) qui se rétrécit d'une première surface (face avant 3) vers une deuxième surface parallèle opposée (face arrière 4), d'une manière telle que l'enceinte de confinement (2) ménagée dans le substrat de silicium (1) orienté (100) est en tronc de pyramide et que l'enceinte de confinement engendrée dans le substrat de silicium orienté (110) comporte de façon correspondante deux parois verticales parallèles et deux parois inclinées.

**3.** Procédé selon la revendication 1 ou 2, **caractérisé en ce que** le substrat de silicium (1) comporte, avant la gravure, sa couche d'arrêt (18) de gravure sur la face arrière (4), **en ce que** le substrat (1) est ensuite gravé de la face avant (3) jusqu'à la couche d'arrêt (18) de gravure, et **en ce qu'**une gravure traversante de la couche d'arrêt (18) de gravure est ensuite effectuée jusqu'à la face arrière (4) du rétrécissement d'ouverture,

**4.** Procédé selon l'une quelconque des revendications 1 à 3, **caractérisé en ce que** la face avant (3) et la face arrière (4), au moins dans la zone des ouvertures (5, 6) de l'enceinte de confinement (2), ainsi que les surfaces internes de l'enceinte de confinement, sont pourvues d'une couche continue de $SiO_2$ par oxydation thermique ou par une technique de dépôt chimique en phase vapeur ou CVD, ou par une technique sol gel.

**5.** Procédé selon l'une quelconque des revendications précédentes, **caractérisé en ce que** la couche de $SiO_2$, qui forme la limite de phase pour la membrane à sélectivité ionique, est silanisée en surface.

**6.** Procédé selon l'une quelconque des revendications précédentes, **caractérisé en ce qu'**une autre couche (par exemple de $Si_3N_4$) est appliquée sur la paroi interne de l'enceinte de confinement (2) au lieu de la couche de $SiO_2$ ou en plus de celle-ci.

**7.** Procédé selon l'une quelconque des revendications précédentes, **caractérisé en ce que** l'électrode (16) se compose d'un film d'argent déposé par évaporation ou par pulvérisation cathodique et structuré par lithographie, d'un film d'argent revêtu de chlorure d'argent ou d'un autre film conducteur.

EP 0 538 428 B1

8. Procédé selon l'une quelconque des revendications 1 à 7, **caractérisé en ce qu'**une solution qui forme après solidification une couche d'électrolyte, par exemple une couche d'hydrogel, est versée dans l'enceinte de confinement (2), l'électrode (16) étant au contact de la membrane au moyen de cette couche d'électrolyte.

9. Procédé selon l'une quelconque des revendications précédentes, **caractérisé en ce qu'**une solution de membrane qui forme après solidification une membrane dans laquelle est emmagasinée une matière à activité biochimique est versée dans l'enceinte de confinement (2), au lieu de la membrane à sélectivité ionique.

10. Procédé de fabrication d'un transistor à effet de champ, à sélectivité ionique, ou ISFET, vertical (VIS-FET) qui comprend les étapes consistant à :

   - appliquer sur la face avant d'un substrat (1) de silicium des couches conductrices n et p superposées verticalement l'une à l'autre pour des zones de source, de drain, et de grille,

   - graver dans un substrat mince de silicium une enceinte de confinement (2) qui consiste en une ouverture (5, 6) qui s'étend - en se rétrécissant - d'une première surface (3) vers une deuxième surface parallèle opposée (4) d'une manière telle que ses surfaces (3, 4) sont connectées, et que cette séquence de couche est adjacente à la paroi interne de l'enceinte de confinement;

   - appliquer une couche diélectrique sur la paroi interne de l'enceinte de confinement,

   - remplir d'une solution de membrane l'enceinte de confinement par la grande ouverture, cette solution de membrane formant après évaporation du solvant une membrane solidifiée (7) à sélectivité ionique qui est au contact de la couche diélectrique.

11. Procédé selon la revendication 10, **caractérisé en ce qu'**une couche interne (31) d'électrolyte, qui est mise en contact d'un contact de grille (33) de l'ISFET vertical, par exemple au moyen d'une couche d'argent revêtue de chlorure d'argent, est appliquée dans l'enceinte de confinement (2) au-dessus de la membrane (7) à sélectivité ionique.

12. Procédé selon la revendication 11, **caractérisé en ce que** l'enceinte de confinement est gravée à partir de la face arrière (4) du substrat et la petite ouverture d'enceinte de confinement est agencée avec la surface active de membrane sur la face avant du substrat.

13. Procédé selon l'une quelconque des revendications précédentes, **caractérisé en ce que** l'ouverture de confinement (2) est connectée à un canal capillaire (34) par une ouverture de remplissage (35) dans laquelle la solution de membrane est versée sous atmosphère de solvant.

14. Procédé selon la revendication 13, **caractérisé en ce qu'**un liquide de membrane est versé d'une ouverture de remplissage à partir de plusieurs enceintes de confinement sur d'autres microplaquettes voisines (39) ou vers toutes les microplaquettes d'un substrat de silicium, et **en ce que** les microplaquettes sont ensuite séparées les unes des autres.

15. Procédé selon l'une quelconque des revendications précédentes, **caractérisé en ce que** la grande ouverture (5) de l'enceinte de confinement et/ou l'ouverture de remplissage ainsi que le canal capillaire (34) sont couverts par une couche de protection (30).

16. Procédé selon l'une quelconque des revendications précédentes, **caractérisé en ce que** l'élément capteur est monté dans un carter ou est scellé au moyen d'une couche protectrice et **en ce que** sa surface active de membrane est, par sa face arrière (4), au contact d'un liquide à mesurer.

**2**   **5**   **3**

*t*

**1**   **15**   **6**   **7**   **4**

Fig. 1

**1**   **15**   **7**   **30**

Fig. 2

Fig. 3

Fig. 4

Fig. 5

Fig. 6

Fig. 7

Fig. 8

Fig. 9

Fig. 10

35   39   34   2   35

Fig. 11

Fig. 12